# EUROPÄISCHE PATENTSCHRIFT

(11) **EP 3 374 617 B1**
(45) Veröffentlichungstag und Bekanntmachung des Hinweises auf die Patenterteilung: **30.12.2020**
(21) Anmeldenummer: 16785367.0
(22) Anmeldetag: 28.09.2016
(51) Int. Cl.: F02D 41/24, F02D 41/00, F02D 41/28

(54) **VERFAHREN ZUR KOMBINIERTEN IDENTIFIZIERUNG EINER KOLBENHUB-PHASENDIFFERENZ, EINER EINLASSVENTILHUB-PHASENDIFFERENZ UND EINER AUSLASSVENTILHUB-PHASENDIFFERENZ EINES VERBRENNUNGSMOTORS**
METHOD FOR THE COMBINED IDENTIFICATION OF A PISTON STROKE PHASE DIFFERENCE, AN INLET VALVE STROKE PHASE DIFFERENCE AND AN OUTLET VALVE STROKE PHASE DIFFERENCE OF AN INTERNAL COMBUSTION ENGINE
PROCÉDÉ D'IDENTIFICATION COMBINÉE D'UNE DIFFÉRENCE DE PHASE DE COURSE DE PISTON, D'UNE DIFFÉRENCE DE PHASE DE COURSE DE SOUPAPE D'ADMISSION ET D'UNE DIFFÉRENCE DE PHASE DE COURSE DE SOUPAPE D'ÉCHAPPEMENT D'UN MOTEUR À COMBUSTION INTERNE

(30) Priorität: 13.11.2015 DE 102015222408
(43) Veröffentlichungstag der Anmeldung: 19.09.2018
(73) Patentinhaber: Vitesco Technologies GmbH, 30165 Hannover (DE)
(72) Erfinder: BRAUN, Tobias, 93152 Undorf (DE); KAINZ, Josef, 94330 Salching (DE)
(74) Vertreter: Waldmann, Georg Alexander
(86) Internationale Anmeldenummer: PCT/EP2016/073070
(87) Internationale Veröffentlichungsnummer: WO 2017/080711

(56) Entgegenhaltungen:
- EP-A1- 1 811 161
- DE-A1-102004 057 260
- DE-A1-102005 007 057
- DE-A1-102012 110 028
- US-A1- 2009 132 144

## Beschreibung

Verfahren zur kombinierten Identifizierung einer Kolbenhub-Phasendifferenz, einer Einlassventilhub-Phasendifferenz und einer Auslassventilhub-Phasendifferenz eines Verbrennungsmotors

Die vorliegende Erfindung betrifft ein Verfahren mit dem Phasendifferenzen des Kolbenhubs, und des Ventilhubs der Einlassventile und der Auslassventile eines Hubkolben-Verbrennungsmotors im Betrieb kombiniert identifiziert werden können durch Auswertung von dynamischen Druckschwingungen der Ansaugluft und/oder des Abgases, die im Luft-Ansaugtrakt bzw. dem Abgas-Auslasstrakt gemessenen werden.

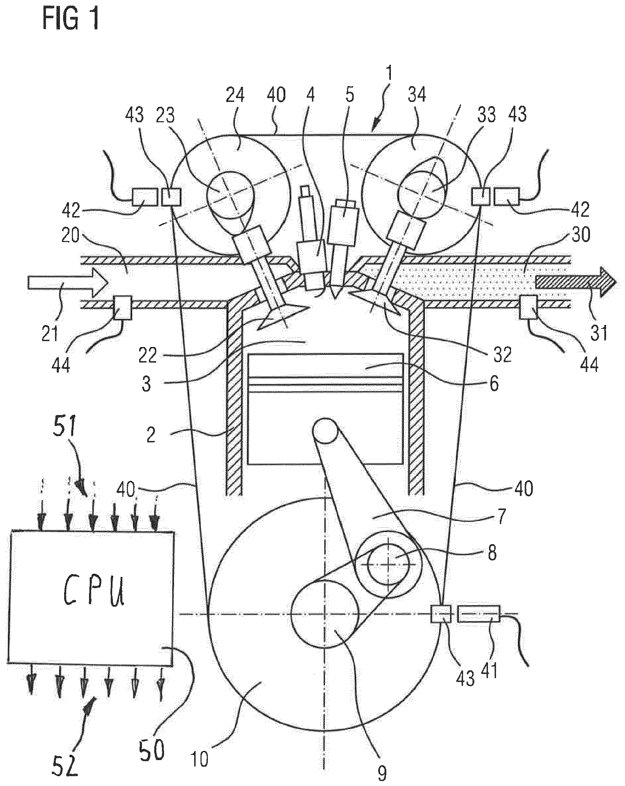

Hubkolben-Verbrennungsmotoren, die im Folgenden verkürzt auch nur als Verbrennungsmotoren bezeichnet werden, weisen ein oder mehrere Zylinder auf in denen jeweils ein Hubkolben angeordnet ist. Zur Veranschaulichung des Prinzips eines Hubkolben-Verbrennungsmotors wird im Folgenden Bezug auf Figur 1 genommen, die beispielhaft einen Zylinders eines ggf. auch mehrzylindrigen Verbennungsmotors mit den wichtigsten Funktionseinheiten darstellt.

Der jeweilige Hubkolben 6 ist linear beweglich im jeweiligen Zylinder 2 angeordnet und schließt mit dem Zylinder 2 einen Brennraum 3 ein. Der jeweilige Hubkolben 6 ist über ein sogenanntes Pleuel 7 mit einem jeweiligen Hubzapfen 8 einer Kurbelwelle 9 verbunden, wobei der Hubzapfen 8 exzentrisch zur Kurbelwellendrehachse 9a angeordnet ist. Durch die Verbrennung eines Kraftstoff-Luft-Gemisches im Brennraum 3 wird der Hubkolben 6 linear "abwärts" angetrieben. Die translatorische Hubbewegung des Hubkolbens 6 wird mittels Pleuel 7 und Hubzapfen 8 auf die Kurbelwelle 9 übertragen und in eine Rotationsbewegung der Kurbelwelle 9 umgesetzt, die den Hubkolben 6 nach Überwindung eines unteren Totpunktes im Zylinder 2 wieder in Gegenrichtung "aufwärts" bis zu einem oberen Totpunkt bewegt. Um einen kontinuierlichen Betrieb des Verbrennungsmotors 1 zu ermöglichen muss während eines sogenannten Arbeitsspiels eines Zylinders 2 zunächst der Brennraum 3 mit dem Kraftstoff-Luft-Gemisch befüllt, das Kraftstoff-Luft-Gemisch im Brennraum 3 verdichtet, dann gezündet und zum Antrieb des Hubkolbens 6 verbrannt werden und schließlich das nach der Verbrennung verbleibende Abgas aus dem Brennraum 3 ausgeschoben werden. Durch kontinuierliche Wiederholung dieses Ablaufs ergibt sich ein kontinuierlicher Betrieb des Verbrennungsmotors 1 unter Abgabe einer zur Verbrennungsenergie proportionalen Arbeit.

Je nach Motorkonzept ist ein Arbeitsspiel des Zylinders 2 in zwei über eine Kurbelwellenumdrehung (360°) verteilte Takte (Zweitaktmotor) oder in vier über zwei Kurbelwellenumdrehungen (720°) verteilte Takte (Viertaktmotor) gegliedert.

Als Antrieb für Kraftfahrzeuge hat sich bis heute der Viertaktmotor durchgesetzt. In einem Ansaugtakt wird, bei Abwärtsbewegung des Hubkolbens 6, Kraftstoff-Luft-Gemisch oder auch nur Frischluft (bei Kraftstoff-Direkteinspritzung) aus dem Luft-Ansaugtrakt 20 in den Brennraum 3 eingebracht. Im folgenden Verdichtungstakt wird, bei Aufwärtsbewegung des Hubkolbens 6, das Kraftstoff-Luft-Gemisch oder die Frischluft im Brennraum 3 verdichtet sowie ggf. separat Kraftstoff mittels eines, zu einem Kraftstoff-Zuführsystem gehörenden, Einspritzventils 5 direkt in den Brennraum 3 eingespritzt. Im folgenden Arbeitstakt wird das Kraftstoff-Luft-Gemisch mittels einer Zündkerze 4 gezündet, expandierend verbrannt und bei Abwärtsbewegung des Hubkolbens 6 unter Abgabe von Arbeit entspannt. Schließlich wird in einem Ausschiebetakt, bei erneuter Aufwärtsbewegung des Hubkolbens 6, das verbleibende Abgas aus dem Brennraum 3 in den Abgas-Auslasstrakt 30 ausgeschoben.

Die Abgrenzung des Brennraumes 3 zum Luft-Ansaugtrakt 20 oder Abgas-Auslasstrakt 30 des Verbrennungsmotors erfolgt in der Regel und insbesondere bei dem hier zugrungegelegten Beispiel über Einlassventile 22 und Auslassventile 32. Die Ansteuerung dieser Ventile erfolgt nach heutigem Stand der Technik über mindestens eine Nockenwelle. Das gezeigte Beispiel verfügt über eine Einlassnockenwelle 23 zur Betätigung der Einlassventile 22 und über eine Auslassnockenwelle 33 zur Betätigung der Auslassventile 32. Zwischen den Ventilen und der jeweiligen Nockenwelle sind zumeist noch weitere, hier nicht dargestellte, mechanische Bauteile zur Kraftübertragung vorhanden, die auch einen Ventilspielausgleich beinhalten können (z.B. Tassenstößel, Kipphebel, Schlepphebel, Stößelstange, Hydrostößel etc.).

Der Antrieb der Einlassnockenwelle 23 und der Auslassnockenwelle 33 erfolgt über den Verbrennungsmotor 1 selbst. Hierzu werden die Einlassnockenwelle 23 und der Auslassnockenwelle 33 jeweils über geeignete Einlassnockenwellen-Steueradapter 24 und Auslassnockenwellen-Steueradapter 34, wie zum Beispiel Zahnräder, Kettenräder oder Riemenräder mithilfe eines Steuergetriebes 40, das zum Beispiel ein Zahnradgetriebe, eine Steuerkette oder einen Steuerzahnriemen aufweist, in vorgegebener Lage zueinander und zur Kurbelwelle 9 über einen entsprechenden Kurbelwellen-Steueradapter 10, der entsprechend als Zahnrad, Kettenrad oder Riemenrad ausgebildet ist, mit der Kurbelwelle 9 gekoppelt. Durch diese Verbindung ist die Drehlage der Einlassnockenwelle 23 und der Auslassnockenwelle 33 in Relation zur Drehlage der Kurbelwelle 9 prinzipiell definiert. In Figur 1 ist beispielhaft die Kopplung zwischen Einlassnockenwelle 23 und der Auslassnockenwelle 33 und der Kurbelwelle 9 mittels Riemenscheiben und Steuerzahnriemen dargestellt.

Der über ein Arbeitsspiel zurückgelegte Drehwinkel der Kurbelwelle wird im Weiteren als Arbeitsphase oder einfach nur Phase bezeichnet. Ein innerhalb einer Arbeitsphase zurückgelegter Drehwinkel der Kurbelwelle wird dem entsprechend als Phasenwinkel bezeichnet. Der jeweils aktuelle Kurbelwellen-Phasenwinkel der Kurbelwelle 9 kann mittels eines mit der Kurbelwelle 9 oder dem Kurbelwellen-Steueradapter 10 verbundenen Lagegebers 43 und einem zugeordneten Kurbelwellen-Lagesensor 41 laufend erfasst werden. Dabei kann der Lagegeber zum Beispiel als Zähnerad mit einer Mehrzahl von äquidistant über den Umfang verteilt angeordneten Zähnen ausgeführt sein, wobei die Anzahl der einzelnen Zähne die Auflösung des Kurbelwellen-Phasenwinkelsignals bestimmt.

Ebenso können ggf. zusätzlich die aktuellen Phasenwinkel der Einlassnockenwelle 23 und der Auslassnockenwelle 33 mittels entsprechender Lagegeber 43 und zugeordneter Nockenwellenlagesensoren 42 laufend erfasst werden.

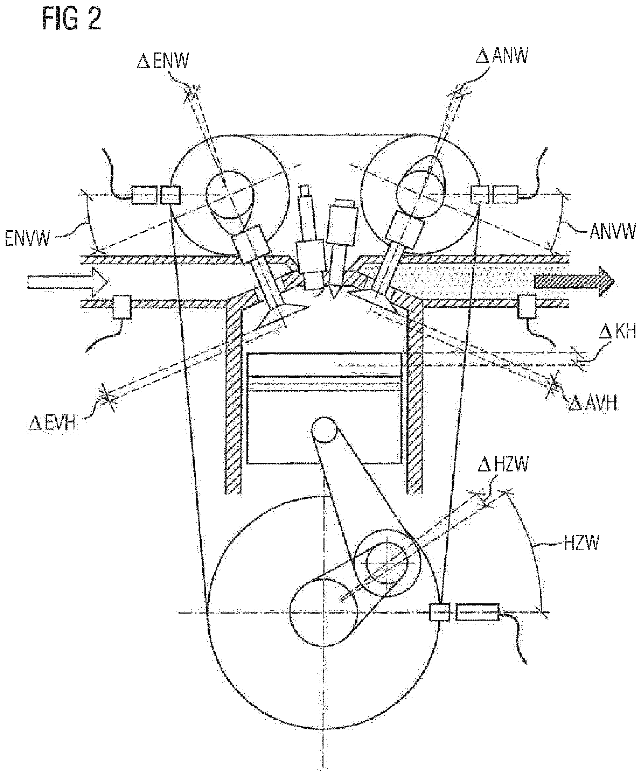

Da sich der jeweilige Hubzapfen 8 und mit ihm der Hubkolben 6, die Einlassnockenwelle 23 und mit ihr das jeweilige Einlassventil 22 sowie die Auslassnockenwelle 33 und mit ihr das jeweilige Auslassventil 32 durch die vorgegebene mechanische Kopplung in vorgegebener Relation zueinander und in Abhängigkeit von der Kurbelwellendrehung bewegen, durchlaufen diese Funktionskomponenten synchron zur Kurbelwelle die jeweilige Arbeitsphase. Die jeweiligen Drehlagen und Hubpositionen von Hubkolben 6, Einlassventilen 22 und Auslassventilen 32 können so, unter Berücksichtigung der jeweiligen Übersetzungsverhältnisse, auf den durch den Kurbelwellen-Lagesensor 41 vorgegebenen Kurbelwellen-Phasenwinkel der Kurbelwelle 9 bezogen werden. Bei einem idealen Verbrennungsmotor ist somit jedem bestimmten Kurbelwellen-Phasenwinkel ein bestimmter Hubzapfenwinkel HZW (Figur 2), ein bestimmter Kolbenhub, ein bestimmter Einlassnockenwellenwinkel und somit ein bestimmter Einlassventilhub sowie ein bestimmter Auslassnockenwellenwinkel und somit ein bestimmter Auslassventilhub zuordenbar. Das heißt alle genannten Komponenten befinden sich bzw. bewegen sich in Phase mit der sich drehenden Kurbelwelle 9.

Bei modernen Verbrennungsmotoren 1 können innerhalb der mechanischen Koppelstrecke zwischen Kurbelwelle 9 und Einlassnockenwelle 23 sowie der Auslassnockenwelle 33 jedoch zusätzliche Stellglieder vorhanden sein, zum Beispiel integriert in den Einlassnockenwellenadapter 24 und den Auslassnockenwellenadapter 34, die einen gewünschten steuerbaren Phasenversatz zwischen der Kurbelwelle 9 und Einlassnockenwelle 23 sowie der Auslassnockenwelle 33 bewirken. Diese sind als sogenannte Phasensteller bei sogenannten variablen Ventiltrieben bekannt.

Symbolisch ist auch ein elektronisches, programmierbares Motorsteuergerät 50 (CPU) dargestellt, das mit Signal-Eingängen zur Entgegennahme der vielfältigen, den Betrieb des Verbrennungsmotors charakterisierenden Sensorsignale und mit Signal- und Leistungs-Ausgängen zur Ansteuerung entsprechender Stelleinheiten und Aktuatoren zur Steuerung der Motorfunktionen ausgestattet ist.

Für einen optimalen Betrieb des Verbrennungsmotors (bezüglich Emissionen, Verbrauch, Leistung, Laufruhe etc.) sollte die während des Ansaugtaktes in den Brennraum eingebrachte Frischgasladung bestmöglich bekannt sein, um die weiteren Parameter für die Verbrennung, wie zum Beispiel die zuzuführende, ggf. direkt eingespritzte Kraftstoffmenge darauf abstimmen zu können. Der sogenannte Ladungswechsel, also das Ansaugen von Frischgas und das Ausschieben des Abgases ist dabei in großem Maße abhängig von den Steuerzeiten der Einlassventile 22 und Auslassventile 32, also vom zeitlichen Verlauf der jeweiligen Ventilhübe in Bezug auf den zeitlichen Verlauf des Kolbenhubs. In anderen Worten ist der Ladungswechsel im Betrieb abhängig von den Phasenlagen der Ein- und Auslassventile in Relation zum Kurbelwellen-Phasenwinkel und somit zur Phasenlage des Hubkolbens.

Stand der Technik zur Ermittlung der Frischgasladung und zur Abstimmung der Steuerparameter des Verbrennungsmotors darauf, ist die Vermessung eines sogenannten Referenz-Verbrennungsmotors in allen auftretenden Betriebszuständen, zum Beispiel in Abhängigkeit von der Drehzahl, der Last, ggf. der durch Phasensteller vorgebbaren Ventilsteuerzeiten, ggf. den Betiebsparametern von Abgasturbolader oder Kompressor, etc. und die Speicherung von diesen Messwerten oder Derivaten davon oder von das Verhalten wiedergebenden Modellansätzen auf dem Motorsteuergerät eines entsprechenden Serien-Verbrennungsmotors. Alle baugleichen, in Serie produzierten Verbrennungsmotoren der gleichen Baureihe werden dann mit diesem erzeugten Referenz-datensatz betrieben.

Eine, zum Beispiel durch Fertigungstoleranzen verursachte, Abweichung der tatsächlichen Relativpositionen zwischen Einlass- und Auslassventilen und dem Kurbelwellen-Phasenwinkel bzw. der Hubkolbenposition eines Serien-Verbrennungsmotors in Bezug auf die idealen Referenzpositionen des Referenz-Verbrennungsmotors, also eine Phasendifferenz des Einlassventilhubs, des Auslassventilhubs und gegebenenfalls des Kolbenhubs in Bezug auf den durch den Kurbelwellen-Lagesensor vorgegebenen Phasenwinkel bzw. die Phasenlage der Kurbelwelle führt dazu, dass die tatsächlich angesaugte Frischgasladung von der als Referenz bestimmten Frischgasladung abweicht und somit die auf dem Referenz-Datensatz basierenden Steuerparameter nicht optimal sind. Beim Betrieb des Verbrennungsmotors können sich durch diese Fehler negative Auswirkungen bezüglich Emissionen, Verbrauch, Leistung, Laufruhe etc. ergeben.

Zur Veranschaulichung der an einem Serien-Verbrennungsmotor auftretenden möglichen Abweichungen und zur Definition der Benennung dieser Abweichungen im Weiteren wird Bezug genommen auf Figur 2, die den Verbrennungsmotor aus Figur 1 zeigt, in der jedoch, zur besseren Übersichtlichkeit die in Figur 1 dargestellten Bezugszeichen weggelassen sind und nur die entsprechenden Abweichungen bezeichnet sind.

Ausgehend von einer Referenzposition des an dem Kurbelwellen-Steueradapter 10 angeordneten Lagegeber 43, dessen Phasenwinkel von dem Kurbelwellen-Lagesensor 41 erfasst wird, ergeben sich mehrere Toleranzketten, die zu Abweichungen der Phasenlagen, im Folgenden auch als Phasendifferenzen bezeichnet, von Hubkolben 6, Einlassventilen 22 und Auslassventilen 32 gegenüber den idealen Referenz-Phasenlagen führen.

Dabei ergibt sich die Kolbenhub-Phasendifferenz ΔKH zum Beispiel aus einer Abweichung des Hubzapfenwinkels HZW, der sogenannten Hubzapfen-Winkeldifferenz ΔHZW, in Relation zur Referenzposition des Kurbelwellen-Lagesensors 41, und aus verschiedenen Maßtoleranzen (nicht dargestellt) von Pleuel 7 und Hubkolben 6.

Weiterhin ergibt sich die Einlassventilhub-Phasendifferenz ΔEVH zum Beispiel aus einer Abweichung der Nockenposition, der sogenannten Einlassnockenwellen-Winkeldifferenz ΔENW zusammen mit mechanischen Toleranzen (nicht dargestellt) des Einlassnockenwellen-Steueradapters 24 und des Steuergetriebes 40. Sofern ein Phasenversteller für die Einlassnockenwelle vorhanden ist, kommt ggf. noch ein Einlassnockenwellen-Verstellwinkel ENVW bzw. eine Abweichung dessen von der Vorgabe in Betracht.

In gleicher Weise ergibt sich die Auslassventilhub-Phasendifferenz ΔAVH zum Beispiel aus einer Abweichung der Nockenposition, der sogenannten Auslassnockenwellen-Winkeldifferenz ΔANW zusammen mit mechanischen Toleranzen (nicht dargestellt) des Auslassnockenwellen-Steueradapters 24 und des Steuergetriebes 40. Sofern ein Phasenversteller für die Auslassnockenwelle vorhanden ist, kommt ggf. noch ein Auslassnockenwellen-Verstellwinkel ANVW bzw. eine Abweichung dessen von der Vorgabe in Betracht.

Mögliche Ursachen für die beschriebenen Abweichungen können z.B. sein:
- Fertigungs- und/oder Montagetoleranzen der beteiligten mechanischen Komponenten, sowie
- Verschleißerscheinungen, wie z. B. eine Längung der Steuerkette oder des Zahnriemens, über die die Kurbelwelle und die Nockenwellen gekoppelt sind sowie
- Verformungserscheinungen elastisch oder plastisch durch hohe mechanische Belastungszustände.

Die bisherige Lösung des beschriebenen Problems, gemäß dem aktuellen Stand der Technik, liegt dabei prinzipiell in der Erfassung und in der Quantifizierung der auftretenden Abweichungen zwischen Referenz-Verbrennungsmotor und Serien-Verbrennungsmotor, um entsprechende Maßnahmen zur Korrektur oder Kompensation mittels Anpassung von Steuerungsparametern durchführen zu können.

Weiterhin wurde bisher versucht diesem Problem zu begegnen durch Minimierung von Fertigungs- und Montagetoleranzen. Ferner werden zum Beispiel die Steuerzeiten anhand Ventilhubstellung, Nockenkontur etc. am jeweiligen stehenden Serien-Verbrennungsmotor vermessen und der Verbrennungsmotor beim Zusammenbau entsprechend justiert.

Weiterhin arbeiten die meisten derzeit bekannten Systeme mit einem Bezugspunktsystem (Positions-Feedback). Hierbei wird an der Kurbelwelle sowie der Einlassnockenwelle und/oder der Auslassnockenwelle oder auch an dem jeweiligen Kurbelwellen-Steueradapter sowie dem Einlassnockenwellen-Steueradapter und/oder dem Auslassnockenwellen-Steueradapter oder auch an einem ggf. vorhandenen Phasensteller etc. jeweils eine Positionsmarke gesetzt, welche mit einem Sensor erfasst werden kann. Dadurch kann die relative Phasenlage zwischen der Kurbelwelle und der jeweiligen Einlassnockenwelle und/oder Auslassnockenwelle ermittelt und Abweichungen zu den angestrebten Referenzwerten identifiziert werden. Den unerwünschten Auswirkungen dieser Abweichungen kann dann durch eine Adaption oder Korrektur entsprechender Steuerparameter, in Abhängigkeit von den ermittelten Abweichungen, im Steuergerät entgegengewirkt werden.

Prinzipbedingt kann mit diesem Verfahren jedoch nur ein Teil der auftretenden Toleranzen erkannt werden. Beispielsweise ist es so nicht möglich, eine Winkelabweichung aufgrund einer Positionsabweichung der jeweiligen Positionsmarken selbst in Bezug auf die Nockenwellen oder eine Einlassnockenwellen-Winkeldifferenz ΔENW bzw. eine Auslassnockenwellen-Winkeldifferenz ΔANW in Bezug auf die jeweilige Referenzposition zu erkennen.

Weitere Verfahren, wie Auswertung des Klopfsensorsignals, Auswertung des Zylinderdrucksignals, sind ebenfalls bekannt. Weiterhin ist aus der US 6, 804, 997 B1 eine Motorsteuervorrichtung zur Bestimmung der Phasenlage der Kurbelwelle durch Überwachung und Auswertung von Druckschwankungen im Ansaugtrackt bekannt. Die Steuervorrichtung ist so ausgebildet, dass sie Ansaugluftdruckschwankungen bestimmt, die ein Ansaugluftereignis und somit eine damit in Relation stehende Kurbelwellenphasenlage sowie deren entsprechende Periode des Motorzyklus anzeigen. Die Steuervorrichtung benutzt diese Informationen, um die Kurbelwellendrehzahl und die Phasenlage der Kurbelwelle zu ermitteln, um die Kraftstoffeinspritzung und das Zündverhalten des Motors zu steuern. Die Steuerzeiten der Einlass- und Auslassventile also ggf. Einlassventilhub-Phasendifferenzen und Auslassventilhub-Phasendifferenzen werden dabei nicht berücksichtigt und können das Ergebnis unter Umstanden erheblich beeinflussen.

Aus dem Dokument DE 10 2005 007 057 ist ein Regelungsverfahren für einen zu regelnden Drosselklappen-Luftstrom im Ansaugtrakt eines Verbrennungsmotors offenbart, wobei Druckpulsationen im Ansaugtrakt, die unter Anderem auch von den Ventilsteuerzeiten des Verbrennungsmotors beinflusst sind, bei der Regelung des Fluidstromes berücksichtigt werden. Dazu werden die Druckpulsationen mittels Fast-Fourier-Transformation analysiert und die Amplitudeninformation in einem Klirrfaktor zusammengefasst, der als eine zusätzliche Eingangsgröße zum Beispiel für ein mehrdimensionales mathematisches Regelungsmodell des Drosselklappen-Luftstromes herangezogen wird. Konkrete Rückschlüsse auf die Ventilsteuerzeiten, also auch ggf. vorhandene Einlassventilhub-Phasendifferenzen und Auslassventilhub-Phasendifferenzen des Verbrennungsmotors können mittels dieses Verfahrens nicht gezogen werden.

Aus Dokument DE 35 06 114 A1 ist ein Verfahren zur Steuerung oder Regelung einer Brennkraftmaschine bei der in Abhängigkeit von einer Betriebsgröße, die wenigstens einen Teil eines Schwingungsspektrums der Brennkraftmaschine als Information enthält, wie zum Beispiel Gasdrucksignalen, wenigstens eine Stellgröße der Brennkraftmaschine gesteuert wird. Dazu wird aus der erfassten Betriebsgröße durch diskrete Fourier-Transformation das in ihr enthaltene Betragsspektrum als Teil des Schwingungsspektrums ermittelt und als Messspektrum herangezogen und mit einem Bezugsspektrum verglichen. Die zu steuernde Stellgröße der Brennkraftmaschine wird dann in Abhängigkeit der Abweichung zwischen Meßspektrum und Bezugsspektrum gesteuert. Ein konkreter Rückschluss auf die Ventilsteuerzeiten und Kolbenhubposition des Verbrennungsmotors kann auch mit Hilfe dieses Verfahrens nicht einfach gezogen werden.

Dokument US 2009 0 312 932 A1 offenbart ein Verfahren zum Diagnostizieren der Verbrennung innerhalb eines Verbrennungsmotors, wobei aus der Kurbelwellen-Winkelgeschwindigkeit mittels einer Fast-Fourier-Transformation ein Verbrennungsphaseneinstellungswert erzeugt wird, dieser Wert mit einem erwarteten Verbrennungsphaseneinstellungswert verglichen wird und Differenzen dieser Werte identifiziert werden, die größer als eine zulässige Verbrennungsphaseneinstellungsdifferenz sind. Eine ähnliche Vorgehensweise zur Ermittlung von Abweichungen zwischen Referenzmotor und Serienmotor wie zuvor beschrieben ist auch in Dokument US 2010 0 063 775 A1 offenbart Ein Verfahren zur Identifizierung einer Einlassventilhub-Phasendifferenz eines Zylinders eines Verbrennungsmotors ist auch in Dokument EP1811161 A1 offenbart.

Der vorliegenden Erfindung liegt die Aufgabe zugrunde, ein einfaches und kostengünstiges Verfahren der eingangs beschriebenen Art zur Verfügung zu stellen, mittels dem eine besonders genaue Identifizierung der tatsächlichen Phasenlagen der Einlassventile, der Auslassventile und des Hubkolbens möglich ist, bzw. die Kolbenhub-Phasendifferenz ΔKH, die Einlassventilhub-Phasendifferenz ΔEVH sowie die Auslassven-tilhub-Phasendifferenz ΔAVH im laufenden Betrieb des Verbrennungsmotors zuverlässig bestimmt werden kann.

Diese Aufgabe wird erfindungsgemäß durch ein Verfahren zur kombinierten Identifizierung einer Kolbenhub-Phasendifferenz, einer Einlassventilhub-Phasendifferenz und einer Auslassventilhub-Phasendifferenz eines Zylinders eines Serien Verbrennungsmotors im Betrieb gemäß dem Hauptanspruch gelöst.

Ausführungsbeispiele und Weiterbildungen des erfindungsgemäßen Gegenstandes sind Gegenstand der Unteransprüche.

Gemäß dem erfindungsgemäßen Verfahren zur kombinierten Identifizierung einer Kolbenhub-Phasendifferenz, einer Einlassventilhub-Phasendifferenz und einer Auslassventilhub-Phasendifferenz eines Zylinders eines Serien Verbrennungsmotors im Betrieb werden dem jeweiligen Zylinder zuordenbare dynamische Druckschwingungen der Ansaugluft im Luft-Ansaugtrakt und/oder des Abgases im Abgas-Auslasstrakt des betreffenden Serien-Verbrennungsmotors im Betrieb gemessen und daraus jeweils ein entsprechendes Druckschwingungssignal erzeugt. Gleichzeitig wird ein Kurbelwellen-Phasenwinkelsignal ermittelt. Aus dem Druckschwingungssignal werden mit Hilfe Diskreter-Fourier-Transformation die Phasenlagen von mehr als zwei ausgesuchten Signalfrequenzen der gemessenen Druckschwingungen in Bezug auf das Kurbelwellen-Phasenwinkelsignal ermittelt.

Weiterhin zeichnet sich das Verfahren durch die folgenden weiteren Schritte aus:
- Auf Basis der ermittelten Phasenlagen der jeweiligen ausgesuchten Signalfrequenzen, werden mehr als zwei in Abhängigkeit von Einlassventilhub-Phasendifferenz und Auslassventilhub-Phasendifferenz stehende Linien gleicher Phasenlagen der ausgesuchten Signalfrequenzen ermittelt. Dies erfolgt mit Hilfe von in Referenzlinien-Kennfeldern gespeicherten oder mittels einer jeweiligen Modell-Funktion ermittelten Referenzlinien der gleichen Phasenlagen;
- Ein einziger gemeinsamer Schnittpunkt der ermittelten Linien gleicher Phasenlagen der ausgesuchten Signalfrequenzen wird ermittelt durch Projektion in eine gemeinsame, durch Einlassventilhub-Phasendifferenz und Auslassventilhub-Phasendifferenz aufgespannte Ebene und signalfrequenzabhängige Phasenverschiebung der ermittelten Linien gleicher Phasenlagen;
- Die Einlassventilhub-Phasendifferenz und die Auslassventilhub-Phasendifferenz wird bestimmt aus dem ermittelten einzigen gemeinsamen Schnittpunkt der Linien gleicher Phasenlagen der ausgesuchten Signalfrequenzen und
- Die Kolbenhub-Phasendifferenz wird bestimmt aus dem Wert der bis zum einzigen gemeinsamen Schnittpunkt der Linien gleicher Phasenlagen der ausgesuchten Signalfrequenzen erfolgten Phasenverschiebungen.

Unter dem Begriff "Luft-Ansaugtrakt" oder auch einfach "Ansaugtrakt", "Ansaugsystem" oder "Einlasstrakt" eines Verbrennungsmotors fasst der Fachmann dabei alle Komponenten, die der Luftzuführung zu den jeweiligen Brennräumen der Zylinder dienen und somit den sogenannten Luftpfad definieren zusammen. Dazu können zum Beispiel ein Luftfilter, ein Ansaugrohr, Ansaugkrümmer oder Verteilerrohr oder kurz Saugrohr, ein Drosselklappenventil, sowie ggf. ein Verdichter und die Ansaugöffnung im Zylinder bzw. der Einlasskanal des Zylinders gehören.
Der Begriff "Abgas-Auslasstrakt" oder kurz "Abgastrakt" oder "Auslasstrakt" des Verbrennungsmotors kennzeichnet dagegen diejenigen Komponenten, die der kontrollierten Abführung des nach der Verbrennung aus den Brennräumen austretenden Abgases dienen.

Zur Analyse des Druckschwingungssignals, wird dieses einer Diskreten Fourier-Transformation (DFT) unterzogen. Dazu kann ein als Fast Fourier-Transformation (FFT) bekannter Algorithmus zur effizienten Berechnung der DFT herangezogen werden. Mittels DFT wird nun das Druckschwingungssignal in einzelne Signalfrequenzen zerlegt, die im Weiteren separat vereinfacht bezüglich ihrer Amplitude und der Phasenlage analysiert werden können.

Im vorliegenden Fall hat sich gezeigt, dass insbesondere die Phasenlage ausgesuchter Signalfrequenzen des Druckschwingungssignals in Abhängigkeit stehen zu den Ventilsteuerzeiten und dem Kolbenhub des Verbrennungsmotors. Die Phasenlage einer Signalfrequenz kennzeichnet dabei die relative Position des Signalfrequenzsignals in Bezug auf das Kurbelwellen-Drehwinkelsignal.

Das erfindungsgemäße Verfahren hat den Vorteil, dass ohne zusätzliche Sensorik die Phasenlagen, also die aktuellen Hubpositionen der Einlassventile der Auslassventile und des Hubkolbens des Verbrennungsmotors in Relation zum Kurbelwellen-Phasenwinkel und mit hoher Genauigkeit ermittelt werden können und so zur genauen Berechnung des Ladungswechselvorgangs und zur Abstimmung der Steuerungsparameter des Verbrennungsmotors herangezogen werden können.

In einer Ausführung des Verfahrens umfasst dieses die dem oben beschriebenen erfindungsgemäßen Verfahren vorausgehenden Schritte der Vermessung eines Referenz-Verbrennungsmotors zur Bestimmung von Referenzlinien gleicher Phasenlagen ausgesuchter Signalfrequenzen des Druckschwingungssignals der Ansaugluft im Luft-Ansaugtrakt- und/oder des Abgases im Abgas-Auslasstrakt in Abhängigkeit von Referenz-Einlassventilhub-Phasendifferenz und Referenz-Auslassventilhub-Phasendifferenz und der Speicherung der Referenzlinien gleicher Phasenlagen der ausgesuchten Signalfrequenzen des Druckschwingungssignals in Abhängigkeit von Referenz-Einlassventilhub-Phasendifferenz und Referenz-Auslassventilhub-Phasendifferenz in Referenzlinien-Kennfeldern.

Auf diese Weise kann die Ermittlung der Einlassventilhub-Phasendifferenz und die Auslassventilhub-Phasendifferenz sowie der Kolbenhub-Phasendifferenz auf einfache Weise durchgeführt werden.

In vorteilhafter Weise können die oben genannten Referenzlinien-Kennfelder in einem Speicherbereich eines ohnehin vorhandenen Motor-Steuergerät des betreffenden Serien-Verbrennungsmotors gespeichert werden und stehen so im Betrieb des Serien-Verbrennungsmotors zur Anwendung im vorgenannten Verfahren unmittelbar zur Verfügung, ohne separate Speichermittel zu benötigen.

In weiter vorteilhafter Weise kann aus den, wie oben beschrieben ermittelten Referenzlinien-Kennfeldern der ausgesuchten Signalfrequenzen des Druckschwingungssignals für die jeweilige Signalfrequenz eine algebraische Modell-Funktion hergeleitet werden, die den Verlauf der jeweiligen Referenzlinien gleicher Phasenwinkel der ausgesuchten Signalfrequenzen des Druckschwingungssignals in Abhängigkeit von Referenz-Einlassventilhub-Phasendifferenz sowie Referenz-Auslassventilhub-Phasendifferenz abbildet. Auf diese Weise wird eine mathematische Formulierung der Referenzlinien gleicher Phasenwinkel zur Verfügung gestellt, die im weiteren Verfahren zur analytischen Ermittlung des gemeinsamen Schnittpunktes der Linien gleicher Phasenlage und somit der Identifizierung der Kolbenhub-Phasendifferenz, der Einlassventilhub-Phasendifferenz und der Auslassventilhub-Phasendifferenz herangezogen werden kann. In Weiterbildung der Erfindung können die wie zuvor beschrieben ermittelten algebraischen Modell-Funktionen für die ausgesuchten Signalfrequenzen in einem Speicherbereich eines Motor-Steuergeräts des betreffenden Serien-Verbrennungsmotors gespeichert werden. Auf diese Weise stehen die algebraischen Modell-Funktionen unmittelbar in der Steuerung zur Verfügung und können auf einfache Weise zur jeweils aktuellen Ermittlung der Linien gleicher Phasenlage herangezogen werden. Es ist somit nicht erforderlich entsprechende Referenzlinien-Kennfelder im Speicher vorzuhalten, die große Datenmengen beinhalten und somit einen erhöhten Speicherplatzbedarf verursachen.

In einer weiteren Ausführung des erfindungsgemäßen Verfahrens, wird die Projektion der ermittelten Linien gleicher Phasenlagen in eine gemeinsame, durch Einlassventilhub-Phasendifferenz und Auslassventilhub-Phasendifferenz aufgespannte Ebene und die signalfrequenzabhängige Phasenverschiebung der ermittelten Linien gleicher Phasenlagen, zur Ermittlung eines gemeinsamen Schnittpunkts, auf der Basis entsprechender algebraischer Funktionen durchgeführt. Dazu werden die in dieser Patentanmeldung zur besseren Veranschaulichung des Verfahrens herangezogenen bildlichen Darstellungen in algebraische Funktionen bzw. Rechenoperationen umgesetzt. Dies ist besonders vorteilhaft bei der Ausführung des Verfahrens mittels einer elektronischen, programmierbaren Recheneinheit, wie beispielsweise einem entsprechenden Motor-Steuergerät, auf der die entsprechenden Rechenoperationen ausführbar sind.

Unter der oben genannten Voraussetzung kann das Verfahren auf einem elektronischen, programmierbaren Motor-Steuergerät des betreffenden Serien-Verbrennungsmotors ausgeführt werden. Dies hat den Vorteil, dass kein separates Steuer- oder Rechengerät erforderlich ist und die Algorithmen des Verfahrens in die entsprechenden Abläufe der Motor-Steuerprogramme eingebunden werden können.

In erweiterter Ausführung der Erfindung wird eine Anpassung von Steuergrößen oder Steuerroutinen, zum Beispiel die einzuspritzende Kraftstoffmasse, der Startzeitpunkt der Einspritzung, der Zündzeitpunkt, die Ansteuerung der Phasensteller der Nockenwellen, etc., im Sinne einer Korrektur der oder Anpassung an die ermittelte Kolbenhub-Phasendifferenz, die ermittelte Einlassventilhub-Phasendifferenz und die ermittelte Auslassventilhub-Phasendifferenz in der Motorsteuerung vorgenommen. So ist es möglich den Verbrennungsvorgang auf die realen Gegebenheiten des jeweiligen Serien-Verbrennungsmotors zu optimieren und so den Kraftstoffbedarf und die Emissionswerte zu reduzieren.

In vorteilhafter Weise entsprechen zur Durchführung des erfindungsgemäßen Verfahrens die ausgesuchten Signalfrequenzen der Ansaugfrequenz als Grundfrequenz oder 1. Harmonische und den weiteren vielfachen, also der 2. bis n. der sogenannten "Harmonischen" der Ansaugfrequenz des Verbrennungsmotors.

Dabei steht die Ansaugfrequenz wiederum in eindeutigem Zusammenhang mit der Drehzahl des Verbrennungsmotors. Für diese ausgesuchten Signalfrequenzen wird dann, unter Heranziehung des parallel erfassten Kurbelwellen-Phasenwinkelsignals, die in diesem Zusammenhang als Phasenwinkel bezeichnete Phasenlage der ausgesuchten Signalfrequenzen in Bezug auf den Kurbelwellen-Phasenwinkel ermittelt. Hierdurch ergeben sich besonders eindeutige und somit gut auszuwertende Ergebnisse bei der Ermittlung der Linien gleicher Phasenlage, die so eine hohe Genauigkeit der Ergebnisse hervorbringt.

In weiter vorteilhafter Weise können die dynamischen Druckschwingungen Der Ansaugluft im Luft-Ansaugtrakt mit Hilfe eines serienmäßigen, ohnehin bereits vorhandenen Drucksensors im Saugrohr gemessen werden. Dies hat den Vorteil, dass dazu kein zusätzlicher Sensor angeordnet werden muss und so keine Zusatzkosten zur Durchführung des erfindungsgemäßen Verfahrens verursacht werden.

Das zur Durchführung des erfindungsgemäßen Verfahrens erforderliche Kurbelwellen-Phasenwinkelsignal kann mit einem mit der Kurbelwelle verbundenen Zähnerad und einem Hall-Sensor ermittelt werden. Eine solche Sensoranordnung ist ebenfalls in modernen Verbrennungsmotoren zu anderen Zwecken bereits vorhanden. Das damit erzeugte Kurbelwellen-Phasenwinkelsignal kann in einfacher Weise von dem erfindungsgemäßen Verfahren mitbenutzt werden. Dies hat den Vorteil, dass kein zusätzlicher Sensor angeordnet werden muss und so keine Zusatzkosten zur Durchführung des erfindungsgemäßen Verfahrens verursacht werden.

Eine detaillierte Betrachtung der Zusammenhänge auf denen die Erfindung basiert erfolgt im Weiteren unter Zuhilfenahme der Figuren. Es zeigt:
- Fig. 1:: Eine vereinfachte Schemazeichnung eines Hubkolben-Verbrennungsmotors
- Fig. 2:: Die Schemazeichnung gemäß Fig. 1 mit Kennzeichnung der möglichen Lage- und Winkelabweichungen maßgeblicher Komponenten des Hubkolben-Verbrennungsmotors
- Fig. 3:: Zwei Dreidimensionale Diagramme zur Darstellung der Abhängigkeit der Phasenlage (PL_SF) zweier ausgesuchter Signalfrequenzen des im Luft-Ansaugtraktund/oder Abgastrakt gemessenen Druckschwingungssignals von der Einlassnockenwellen-Winkeldifferenz und der Auslassnockenwellen-Winkeldifferenz.
- Fig. 4:: Zwei zweidimensionale Diagramme zur Darstellung von Linien gleicher Phasenlagen für zwei ausgesuchte Signalfrequenzen des im Luft-Ansaugtrakt und/oder Abgastrakt gemessenen Druckschwingungssignals, pro-jiziert in eine von der Einlassnockenwellen-Winkeldifferenz und der Auslassnockenwellen-Winkeldifferenz aufgespannte Ebene.
- Fig. 5:: Ein zweidimensionales Diagramm gemäß Fig. 4 mit eingezeichneten Linien gleicher Phasenlagen unterschiedlicher Signalfrequenzen für eine bestimmte Kombination von Einlassnockenwellen-Winkeldifferenz und der Auslassnockenwellen-Winkeldifferenz.
- Fig. 6:: Ein zweidimensionales Diagramm wie in Figur 5 mit eingezeichneten Linien gleicher Phasenlagen unterschiedlicher Signalfrequenzen für eine bestimmte Kombination von Einlassnockenwellen-Winkeldifferenz und der Auslassnockenwellen-Winkeldifferenz bei überlagerter Kolbenhub-Phasendifferenz.
- Fig. 7:: Ein vereinfachtes Blockdiagramm zur Veranschaulichung des Verfahrens

Die Erfindung beruht auf der folgenden Erkenntnis:
Bei Variation der Einlassventilhub-Phasendifferenz ΔEVH und der Auslassventilhub-Phasendifferenz ΔAVH an einem "idealen" Referenz-Verbrennungsmotors und der Analyse des Druckschwingungssignals der Ansaugluft im Luft-Ansaugtrakt oder des Abgases im Abgas-Auslasstrakt, im Folgenden kurz als Druckschwingungssignal bezeichnet, mittels diskreter Fourier-Analyse und der Betrachtung einzelner ausgesuchter Signalfrequenzen, die jeweils der Ansaugfrequenz oder einem Vielfachen der Ansaugfrequenz entsprachen, hat sich gezeigt, dass insbesondere die Phasenlagen der einzelnen ausgesuchten Signalfrequenzen, also die relative Lage des Druckschwingungssignals in Bezug auf das Kurbelwellen-Phasenwinkelsignal in Abhängigkeit stehen von der Einlassventilhub-Phasendifferenz ΔEVH und der Auslassventilhub-Phasendifferenz ΔAVH.

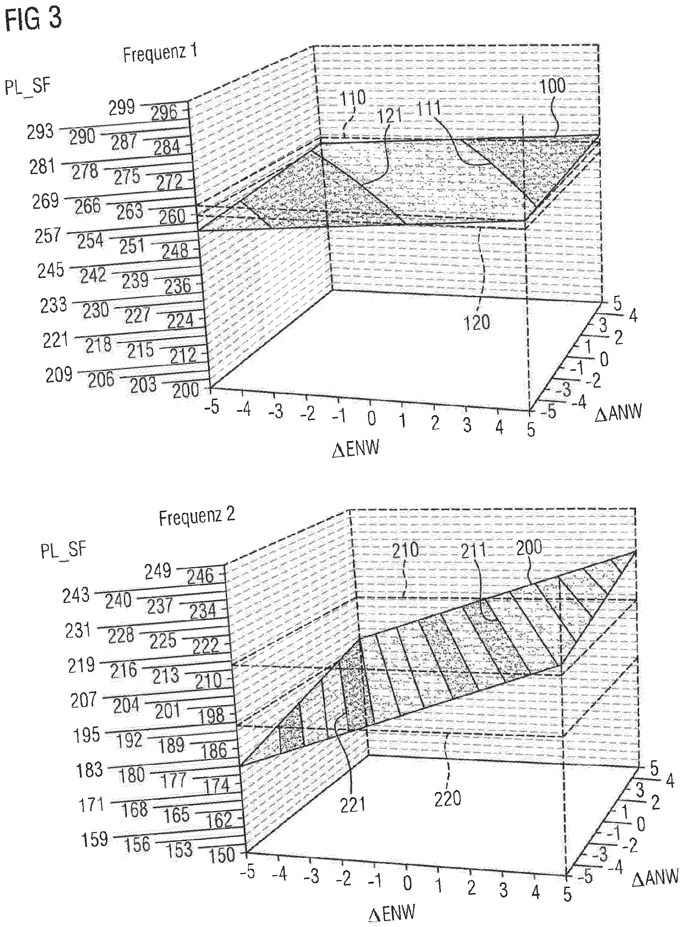

In Figur 3 ist diese Abhängigkeit für zwei unterschiedliche Signalfrequenzen, die Ansaugfrequenz, Frequenz 1, und die erste Harmonische, Frequenz 2, dargestellt.

Zur Variation der Einlassventilhub-Phasendifferenz ΔEVH und der Auslassventilhub-Phasendifferenz ΔAVH wurde dazu mittels eines jeweiligen Phasenstellers die Einlassnockenwellen-Winkeldifferenz ΔENW und die Auslassnockenwellen-Winkeldifferenz ΔANW im Bereich zwischen -5° und +5° variiert und die jeweils zugehörige Phasenlage der jeweiligen Signalfrequenz PL_SF des Druckschwingungssignals senkrecht über der so aufgespannten ΔENW-ΔANW-Ebene aufgetragen. Für jede ausgesuchte Signalfrequenz ergibt sich so eine unterschiedlich geneigte "Phasen-Fläche" 100, 200 in dem aufgespannten dreidimensionalen Raum. Legt man nun parallel zur ΔENW-ΔANW-Ebene liegende Schnittebenen 110, 120, 210, 220 in Höhe verschiedener Phasenlagen PL_SF der jeweiligen Signalfrequenz, so ergeben sich jeweils Schnittlinien mit der jeweiligen Phasen-Fläche 100, 200 die als Linie gleicher Phasenlage bezeichnet werden. Das heißt für alle entlang einer solchen Linie gleicher Phasenlage liegenden ΔENW-ΔANW-Kombinationen ergibt sich die gleiche Phasenlage der ausgesuchten Frequenz des Druckschwingungssignals. Im Umkehrschluss heißt dies, dass einer ermittelten Phasenlage einer Signalfrequenz des Druckschwingungssignals keine eindeutige ΔENW-ΔANW-Kombination zugewiesen werden kann.

In Figur 3 sind bei Frequenz 1 die Phasen-Fläche 100 und beispielhaft zwei Schnittebenen 110, 120 bei Phasenlage 260° und 265° eingezeichnet. Für Phasenlage 263° ergibt sich die Linie gleicher Phasenlage 111 und für Phasenlage 260° ergibt sich die Linie gleicher Phasenlage 121. Bei Frequenz 2 ist die Phasen-Fläche 200 und beispielhaft zwei Schnittebenen 210, 220 bei Phasenlage 216° und 195° eingezeichnet. Für Phasenlage 216° ergibt sich die Linie gleicher Phasenlage 211 und für Phasenlage 195° ergibt sich die Linie gleicher Phasenlage 221.

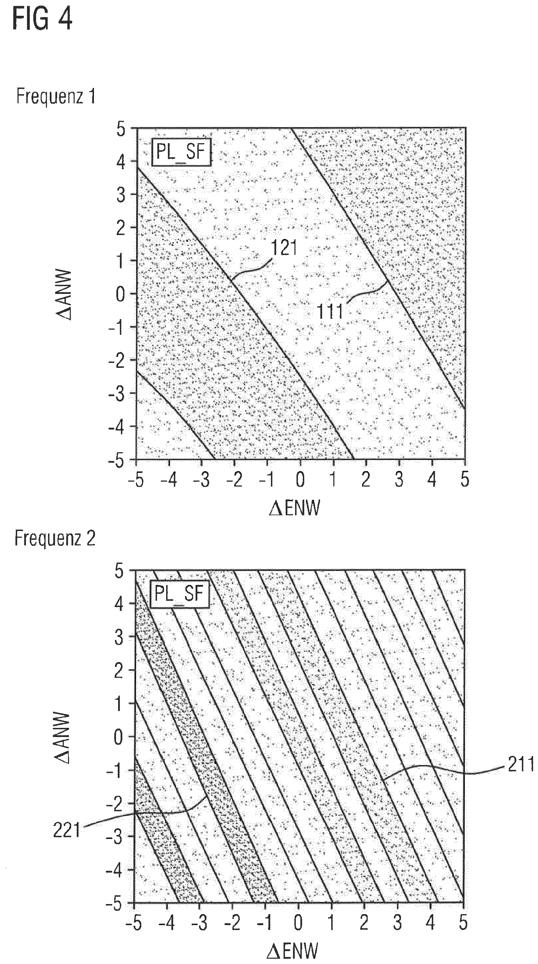

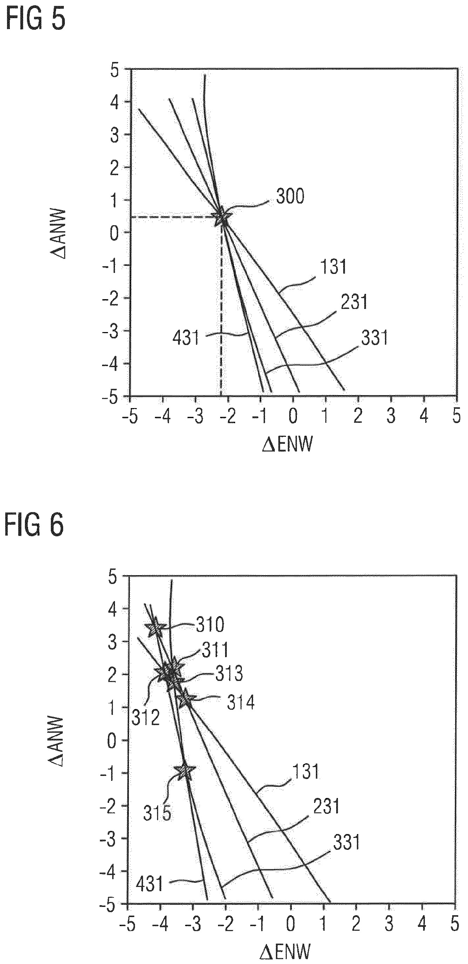

Zur weiteren Untersuchung der Zusammenhänge wurden nun die Linien gleicher Phasenlage jeder ausgesuchten Signalfrequenz des Druckschwingungssignals in die ΔENW-ΔANW-Ebene projiziert. Dies ist in Figur 4 analog zur Figur 3 für Frequenz 1 und Frequenz 2 getrennt dargestellt. Die entsprechenden Linien gleicher Phasenlage 111, 121 für Frequenz 1 bei 263° und 260° sowie 211, 221 für Frequenz 2 bei 216° und 195° sind auch in dieser Darstellung mit entsprechenden Bezugszeichen gekennzeichnet. Es zeigt sich, dass die Linien gleicher Phasenlagen der unterschiedlichen ausgesuchten Signalfrequenzen unterschiedliche Steigungen aufweisen. Projiziert man nun die Linien der gleichen Phasenlage der unterschiedlichen ausgesuchten Signalfrequenzen in der ΔENW-ΔANW-Ebene übereinander, wie dies in Figur 5 anhand von Linien gleicher Phasenlage 131, 231, 331 und 431 dargestellt ist, so zeigt sich, dass sich die Linien der gleichen Phasenlage der unterschiedlichen Signalfrequenzen genau in einem Punkt schneiden, der somit eine einzige ΔENW-ΔANW-Kombination repräsentiert. (es sei darauf hingewiesen, dass die in den Figuren 5 und 6 dargestellten Linien gleicher Phasenlage nicht in Fortführung der Darstellung aus den vorausgehenden Figuren zu betrachten sind) Da unter Zugrundelegung eines idealen Referenzmotors von einem unmittelbaren und unbeeinflussten Zusammenwirken der Einlassnockenwelle 23 mit den Einlassventilen 22 und der Auslassnockenwelle 33 mit den Auslassventilen 32 ausgegangen werden kann, kann einer Einlassnockenwellen-Winkeldifferenz ΔENW eine konkrete Einlassventilhub-Phasendifferenz ΔEVH und der Auslassnockenwellen-Winkeldifferenz ΔANW eine konkrete Auslassventilhub-Phasendifferenz ΔAVH zugeordnet werden.

Geht man also von sonst idealen Verhältnissen aus, so lässt sich durch Ermittlung der Phasenlage der ausgesuchten Signalfrequenzen des Druckschwingungssignals und unter Heranziehung und Überlagerung der bekannten Linien gleicher Phasenlage der ermittelten Phasenlagen der jeweiligen Signalfrequenz, durch Projektion in eine gemeinsame ΔEVH-ΔAVH-Ebene, der einzigen Schnittpunkt der Linien gleicher Phasenlage ermitteln und daraus der Wert der Einlassventilhub-Phasendifferenz ΔEVH und der Auslassventilhub-Phasendifferenz ΔAVH bestimmen.

Bei weiteren Untersuchungen wurde nun zusätzlich zu Einlassventilhub-Phasendifferenz ΔEVH und Auslassventilhub-Phasendifferenz ΔAVH eine Abweichung der Hubkolbenposition, eine sogenannte Kolbenhub-Phasendifferenz ΔKH, überlagert, wie dies auch bei einem Serien-Verbrennungsmotor zu erwarten wäre. Dabei hat sich gezeigt, dass sich bei zusätzlich auftretender Kolbenhub-Phasendifferenz ΔKH die Linien gleicher Phasenlage der ausgesuchten Signalfrequenzen bei Überlagerung durch Projektion in eine gemeinsame Ebene, nun nicht mehr in einem einzigen Punkt schneiden. Dies ist in Figur 6 dargestellt. Hier zeigen sich bei Überlagerung der Linien gleicher Phasenlage mehrere separate Schnittpunkte 311 bis 315.

Es wurde jedoch ermittelt, dass die auftretende Kolbenhub-Phasendifferenz ΔKH eine von der jeweiligen ausgesuchten Signalfrequenz abhängige Phasenverschiebung der jeweiligen Linie gleicher Phasenlage 131, 231, 331 und 431 der unterschiedlichen Signalfrequenzen bewirkt, deren Wert von dem Wert der Kolbenhub-Phasendifferenz ΔKH abhängig ist. Dabei hat sich insbesondere gezeigt, dass bei steigender Frequenz auch der Wert der Phasenverschiebung der jeweiligen Linie gleicher Phasenlage in linearer Abhängigkeit ansteigt. Tritt also bei einer der 1. Harmonischen entsprechenden Signalfrequenz eine Phasenverschiebung der zugehörigen Linie gleicher Phasenlage um einen Wert X auf, so wäre bei der 2. Harmonischen eine Phasenverschiebung der zugehörigen Linie gleicher Phasenlage um 2X zu erwarten.

So kann also durch entsprechende Phasenverschiebung der einzelnen ermittelten Linien gleicher Phasenlage 131, 231, 331 und 431 um einen jeweils bestimmten von der Kolbenhub-Phasendifferenz ΔKH abhängigen Wert X, 2X, etc. wieder ein einziger Schnittpunkt gefunden werden.

Dabei gibt die Lage des Schnittpunktes in der ΔENW-ΔANW-Ebene, wie bereits zuvor beschrieben, Auskunft über die Einlassnockenwellen-Winkeldifferenz ΔENW bzw. die Einlassvetilhub-Phasendifferenz ΔEVH sowie die Auslassnocksnwellen-Winkeldifferenz ΔANW bzw. die Auslassvetilhub-Phasendifferenz ΔAVH. Die Kolbenhub-Phasendifferenz ΔKH dagegen kann bestimmt werden aus dem Wert der erforderlichen Phasenverschiebung bis zum gemeinsamen Schnittpunkt der Linien gleicher Phasenlage 131, 231, 331 und 431.

Die in den Figuren 3 bis 6 graphisch dargestellten Zusammenhänge dienen der einfacheren Verständlichkeit der Grundlagen des Verfahrens. Selbstverständlich können diese Zusammenhänge auch anhand entsprechender algebraischer Formulierungen dargestellt und das Verfahren auf dieser Basis, mittels entsprechender Rechenoperationen und Programm-Algorithmen ausgeführt werden. Dafür werden zum Beispiel zur Darstellung der Linien gleicher Phasenlagen entsprechende mathematisch-physikalische Modellfunktionen abgeleitet, die zur Ermittlung des gemeinsamen Schnittpunktes und der erforderlichen Phasenverschiebung herangezogen werden können.

Die Erfindung des Verfahrens zur kombinierten Identifizierung einer Kolbenhub-Phasendifferenz ΔKH, einer Einlassventilhub-Phasendifferenz ΔEVH und einer Auslassventilhub-Phasendifferenz ΔAVH eines Verbrennungsmotors im Betrieb basiert auf den oben dargestellten Erkenntnissen und stellt sich demnach in einem Beispiel wie folgt dar:
Im Betrieb des Verbrennungsmotors werden laufend die dynamischen Druckschwingungen der Ansaugluft im Luft-Ansaugtrakt oder des Abgases im Abgas-Auslasstrakt oder auch in beiden Bereichen gemessen. Die jeweilige Messung ergibt ein Druckschwingungssignal. Dieses Druckschwingungssignal wird einem Steuergerät des Verbrennungsmotors zugeführt. Im Steuergerät wird das Druckschwingungssignal mittels dort hinterlegter Programm-Algorithmen einer Diskreten-Fourier-Transformation unterzogen und die Phasenlage ausgesuchter Signalfrequenzen, vorzugsweise der ersten und weiteren Harmonischen der Ansaugfrequenz des Verbrennungsmotors, der gemessenen Druckschwingungen in Bezug auf das Kurbelwellen-Phasenwinkelsignal ermittelt. In der Folge werden nun, für die einzelnen ausgesuchten Signalfrequenzen, auf Basis der jeweiligen Phasenlage jeweils eine entsprechende Linie gleicher Phasenlage ermittelt. Dies erfolgt jeweils entweder durch Auswahl einer Referenzlinie der gleichen Phasenlage aus einem für die entsprechende Verbrennungsmotor-Serie typischen, in einem Speicherbereich des Steuergeräts hinterlegten Referenzlinien-Kennfeld oder durch Berechnung mittels einer jeweiligen, für die entsprechende Verbrennungsmotor-Serie typischen, in einem Speicherbereich des Steuergeräts hinterlegten algebraischen Modell-Funktion und entsprechender Rechenoperationen und Programm-Algorithmen.

Die so ermittelten Linien gleicher Phasenlage der einzelnen ausgesuchten Signalfrequenzen werden dann mittels entsprechender, im Steuergerät hinterlegter Programm-Algorithmen in eine gemeinsame aus Einlassventilhub-Phasendifferenz ΔEVH und Auslassventilhub-Phasendifferenz ΔAVH aufgespannte Ebene projiziert und, sofern erforderlich, durch signalfrequenzabhängige Phasenverschiebung der einzelnen Linien zu einem einzigen gemeinsamen Schnittpunkt gebracht. Aus der Lage dieses gemeinsamen Schnittpunktes in der aus Einlassventilhub-Phasendifferenz ΔEVH und Auslassventilhub-Phasendifferenz ΔAVH aufgespannten Ebene kann nun die Einlassventilhub-Phasendifferenz ΔEVH und Auslassventilhub-Phasendifferenz ΔAVH bestimmt werden.

Ergibt die Projektion der Linien gleicher Phasenlage in die genannte gemeinsame Ebene nicht bereits einen einzigen gemeinsamen Schnittpunkt, so ist von einer zusätzlichen Kolbenhub-Phasendifferenz auszugehen, die, wie zuvor erläutert, eine Verschiebung der Phasenlage der einzelnen ausgesuchten Signalfrequenzen und somit der entsprechenden Linien gleicher Phasenlage um einen jeweils von der zugehörigen Signalfrequenz abhängigen Betrag in gleicher Richtung, also signalfrequenzabhängig, bewirkt hat. Da die Verschiebung der Phasenlage in eindeutigem Zusammenhang mit der Kolbenhub-Phasendifferenz steht, ergibt die entsprechende signalfrequenzabhängige (Zurück-)Verschiebung der Linien gleicher Phasenlage bis zum einzigen gemeinsamen Schnittpunkt ein konkretes Maß für die Kolbenhub-Phasendifferenz ΔKH. Somit kann also die Kolbenhub-Phasendifferenz aus dem Wert der bis zum gemeinsamen Schnittpunkt der Linien gleicher Phasenlagen der ausgesuchten Signalfrequenzen erfolgten Phasenverschiebung bestimmt werden.

Zur Durchführung des Verfahrens ist es erforderlich, dass spezifische Kennfelder mit Referenzlinien gleicher Phasenlage oder entsprechende algebraische Modell-Funktionen zur Verfügung stehen. Diese sind abhängig von der Bauart und der konstruktiven Detailausführung der Baureihe/Serie eines Verbrennungsmotors und müssen deshalb an einem für die Serie typischen, baugleichen Referenz-Verbrennungsmotor ermittelt werden. Dazu wird an dem Referenz-Verbrennungsmotor das Druckschwingungssignal im Luft-Ansaugtrakt und/oder im Abgas-Auslasstrakt in möglichst vielen Betriebspunkten unter Variation der Einlassventilhub-Phasendifferenz ΔEVH und der Auslassventilhub-Phasendifferenz ΔAVH aufgenommen, einer Diskreten-Fourier-Transformation unterzogen und die Phasenlagen für die ausgesuchten Signalfrequenzen in Abhängigkeit von der Einlassventilhub-Phasendifferenz ΔEVH und der Auslassventilhub-Phasendifferenz ΔAVH abgespeichert. Dabei ist darauf zu achten, dass keine Kolbenhub-Phasendifferenz ΔKH die Ergebnisse überlagert bzw. diese verfälscht.

Auf Basis dieser so ermittelten dreidimensionalen Datenfelder können nun für die einzelnen ausgesuchten Signalfrequenzen die Linien gleicher Phasenlage ermittelt und in entsprechende Kennfelder gespeichert werden, respektive die algebraischen Modell-Funktionen zur Berechnung der Linien gleicher Phasenlage ermittelt werden.

Die so ermittelten Kennfelder und/oder Modellfunktionen werden dann in einem Speicherbereich eines Steuergeräts jedes baugleichen Serien-Verbrennungsmotors hinterlegt und können zur Durchführung des erfindungsgemäßen Verfahrens herangezogen werden.

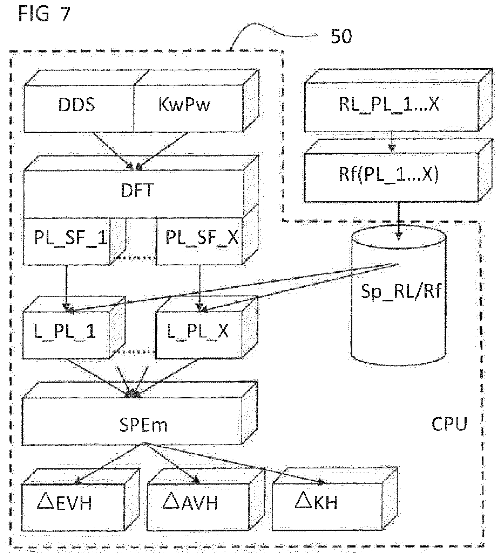

In Figur 7 ist eine Ausführung des erfindungsgemäßen Verfahrens zur kombinierten Identifizierung einer Kolbenhub-Phasendifferenz, einer Einlassventilhub-Phasendifferenz und einer Auslassventilhub-Phasendifferenz eines Zylinders eines Serien Verbrennungsmotors im Betrieb nochmals in Form eines vereinfachten Blockdiagrammes mit den wesentlichen Schritten dargestellt.
Zu Beginne werden dem jeweiligen Zylinder zuordenbare dynamische Druckschwingungen der Ansaugluft im Luft-Ansaugtrakt und/oder des Abgases im Abgas-Auslasstrakt des betreffenden Serien-Verbrennungsmotors im Betrieb gemessen und daraus ein entsprechendes Druckschwingungssignal erzeugt und es wird gleichzeitig ein Kurbelwellen-Phasenwinkelsignal ermittelt, was durch die parallel angeordneten, mit DDS (Dynamisches Druckschwingungssignal) und KwPw (Kurbelwellen-Phasenwinkel)gekennzeichneten Blöcke dargestellt ist.

Aus dem Druckschwingungssignal (DDS) wird dann mit Hilfe Diskreter-Fourier-Transformation (DFT) die Phasenlage mehrerer ausgesuchter Signalfrequenzen (PL_SF_1 ... PL_SF_X) der gemessenen Druckschwingungen in Bezug auf das Kurbelwellen-Phasenwinkelsignal (KwPw) ermittelt, was durch die mit DFT (Diskrete-Fourier-Transformation) und PL_SF_1 ... PL_SF_X (Phasenlage der jeweiligen Signalfrequenz) gekennzeichneten Blöcke dargestellt ist.

Auf Basis der ermittelten Phasenlage (PL_SF_1...PL_SF_X) der jeweiligen ausgesuchten Signalfrequenz, wird dann je eine in Abhängigkeit von Einlassventilhub-Phasendifferenz und Auslassventilhub-Phasendifferenz stehende Linie gleicher Phasenlage (L_PL_1...L_PL_X) der jeweils gleichen Signalfrequenz ermittelt, wie mittels der entsprechend gekennzeichneten Blöcke verdeutlicht wird . Dies geschieht mit Hilfe von in Referenzlinien-Kennfeldern gespeicherten oder mittels einer jeweiligen algebraischen Modell-Funktion ermittelten Referenzlinien der gleichen Phasenlage (RL-PL_1...PL_PL_X) der jeweiligen Signalfrequenz. Hierzu ist in dem Diagramm der Figur 7 ein mit Sp_RL/Rf gekennzeichneter Speicher dargestellt, aus dem die darin zur Verfügung gestellten Referenzlinien gleicher Phasenlage RL_PL_1...X oder auch entsprechende algebraische Modell-Funktionen Rf (PL_1...X) zur Ermittlung dieser Linien abgerufen werden können.

Im Weiteren wird dann zumindest ein jeweiliger gemeinsamer Schnittpunkt der ermittelten Linien gleicher Phasenlage (L_PL_1...L_PL_X) durch Projektion in eine gemeinsame, durch Einlassventilhub-Phasendifferenz und Auslassventilhub-Phasendifferenz aufgespannte Ebene und signalfrequenzabhängige Phasenverschiebung der ermittelten Linien gleicher Phasenlagen ermittelt, was durch den mit SPEm (Schnittpunkt-Ermittlung) gekennzeichneten Block dargestellt ist.

Schließlich wird aus dem ermittelten Schnittpunkt der Linien gleicher Phasenlage (L_PL_1...L_PL_X) der ausgesuchten Signalfrequenzen die Einlassventilhub-Phasendifferenz (ΔEVH) und der Auslassventilhub-Phasendifferenz (ΔAVH) bestimmt. Die Kolbenhub-Phasendifferenz (ΔKH) wird aus den Werten der bis zum gemeinsamen Schnittpunkt der Linien gleicher Phasenlagen der ausgesuchten Signalfrequenzen erfolgten Phasenverschiebung ermittelt. Dies ist durch die entsprechend gekennzeichneten Blöcke dargestellt in Figur 7 dargestellt.

Weiterhin zeigt Figur 7 die dem oben beschriebenen Verfahren vorausgehenden Schritte der Vermessung eines Referenz-Verbrennungsmotors zur Bestimmung von Referenzlinien gleicher Phasenlagen (RL_PL_1...X) ausgesuchter Signalfrequenzen des Druckschwingungssignals im Luft-Ansaugtrakt und/oder des Abgases im Abgas-Auslasstrakt, in Abhängigkeit von Referenz-Einlassventilhub-Phasendifferenz und Referenz-Auslassventilhub-Phasendifferenz, sowie die Speicherung der Referenzlinien gleicher Phasenlagen der ausgesuchten Signalfrequenzen des Druckschwingungssignals jeweils in Abhängigkeit von Referenz-Einlassventilhub-Phasendifferenz und Referenz-Auslassventilhub-Phasendifferenz in Referenzlinien-Kennfeldern, was symbolisch durch dem mit RL_PL_1...X bezeichneten Block dargestellt ist.

Der mit Rf (PL_1...x) gekennzeichnete Block beinhaltet die Herleitung von algebraischen Modell-Funktionen, die als Referenzlinienfunktionen gleicher Phasenlage (Rf (PL_1)...Rf(PL_X)) den Verlauf der jeweiligen Referenzlinien gleicher Phasenlagen der ausgesuchten Signalfrequenzen des Druckschwingungssignals in Abhängigkeit von Referenz-Einlassventilhub-Phasendifferenz sowie Referenz-Auslassventilhub-Phasendifferenz abbilden, auf Basis der zuvor ermittelten Referenzlinien-Kennfelder.

Die Referenzlinien-Kennfelder bzw. Referenzlinienfunktionen gleicher Phasenlage werden dann in einem Speicherbereich (Sp_RL/Rf) eines Motor-Steuergeräts (CPU) des betreffenden Serien-Verbrennungsmotors gespeichert, wo sie zur Durchführung des zuvor erläuterten erfindungsgemäßen Verfahrens zur Verfügung stehen.

Die im Blockdiagramm gestrichelt eingezeichnete Umrahmung der entsprechenden Blöcke, stellt symbolisch die Grenze eines elektronischen programmierbaren Motor-Steuergerät 50 (CPU) des betreffenden Serien-Verbrennungsmotors dar, auf dem das Verfahren ausgeführt wird.

## Patentansprüche

1. Verfahren zur kombinierten Identifizierung einer Kolbenhub-Phasendifferenz, einer Einlassventilhub-Phasendifferenz und einer Auslassventilhub-Phasendifferenz eines Zylinders eines Serien Verbrennungsmotors im Betrieb, wobei
- dem Zylinder zuordenbare dynamische Druckschwingungen der Ansaugluft im Luft-Ansaugtrakt und/oder des Abgases im Abgas-Auslasstrakt des betreffenden Serien-Verbrennungsmotors im Betrieb gemessen werden und daraus ein entsprechendes Druckschwingungssignal erzeugt wird und wobei gleichzeitig ein Kurbelwellen-Phasenwinkelsignal ermittelt wird,
- wobei aus dem Druckschwingungssignal mit Hilfe Diskreter-Fourier-Transformation die Phasenlagen von mehr als zwei ausgesuchten Signalfrequenzen der gemessenen Druckschwingungen, in Bezug auf das Kurbelwellen-Phasenwinkelsignal ermittelt werden, **gekennzeichnet durch** die folgenden weiteren Schritte:
- auf Basis der ermittelten Phasenlagen der jeweiligen ausgesuchten Signalfrequenzen, ermitteln von mehr als zwei in Abhängigkeit von Einlassventilhub-Phasendifferenz und Auslassventilhub-Phasendifferenz stehenden Linien gleicher Phasenlagen der ausgesuchten Signalfrequenzen mit Hilfe von in Referenzlinien-Kennfeldern gespeicherten oder mittels einer jeweiligen algebraischen Modell-Funktion ermittelten Referenzlinien der gleichen Phasenlagen;
- Ermitteln eines einzigen gemeinsamen Schnittpunktes der ermittelten Linien gleicher Phasenlagen der ausgesuchten Signalfrequenzen durch Projektion in eine gemeinsame, durch Einlassventilhub-Phasendifferenz und Auslassventilhub-Phasendifferenz aufgespannte Ebene und signalfrequenzabhängige Phasenverschiebung der ermittelten Linien gleicher Phasenlagen;
- Bestimmen der Einlassventilhub-Phasendifferenz und der Auslassventilhub-Phasendifferenz aus dem ermittelten einzigen gemeinsamen Schnittpunkt der Linien gleicher Phasenlagen der ausgesuchten Signalfrequenzen und
- Bestimmen der Kolbenhub-Phasendifferenz aus den Werten der bis zum einzigen gemeinsamen Schnittpunkt der Linien gleicher Phasenlagen der ausgesuchten Signalfrequenzen erfolgten Phasenverschiebung.

2. Verfahren nach Anspruch 1, **dadurch gekennzeichnet, dass** es die folgenden vorausgehenden Schritte umfasst:
- Vermessung eines Referenz-Verbrennungsmotors zur Bestimmung von Referenzlinien gleicher Phasenlagen der ausgesuchten Signalfrequenzen des Druckschwingungssignals der Ansaugluft im Luft-Ansaugtrakt und/oder des Abgases im Abgas-Auslasstrakt in Abhängigkeit von Referenz-Einlassventilhub-Phasendifferenz und Referenz-Auslassventilhub-Phasendifferenz und
- Speicherung der Referenzlinien gleicher Phasenlagen der ausgesuchten Signalfrequenzen des Druckschwingungssignals in Abhängigkeit von Referenz-Einlassventilhub-Phasendifferenz und Referenz-Auslassventilhub-Phasendifferenz in Referenzlinien-Kennfeldern.

3. Verfahren nach Anspruch 2, **dadurch gekennzeichnet, dass** die Referenzlinien-Kennfelder in einem Speicherbereich eines Motor-Steuergeräts des betreffenden Serien-Verbrennungsmotors gespeichert werden.

4. Verfahren nach Anspruch 2, **dadurch gekennzeichnet, dass** aus den Referenzlinien-Kennfeldern der ausgesuchten Signalfrequenzen des Druckschwingungssignals für die jeweilige Signalfrequenz eine algebraische Modell-Funktion hergeleitet wird, die den Verlauf der jeweiligen Referenzlinien gleicher Phasenlagen der ausgesuchten Signalfrequenzen des Druckschwingungssignals in Abhängigkeit von Referenz-Einlassventilhub-Phasendifferenz sowie Referenz-Auslassventilhub-Phasendifferenz abbildet.

5. Verfahren nach Anspruch 4, **dadurch gekennzeichnet, dass** die algebraischen Modell-Funktionen für die ausgesuchten Signalfrequenzen in einem Speicherbereich eines Motor-Steuergeräts des betreffenden Serien-Verbrennungsmotors gespeichert werden.

6. Verfahren nach einem der vorausgehenden Ansprüche, **dadurch gekennzeichnet, dass** die Projektion der ermittelten Linien gleicher Phasenlagen in eine gemeinsame, durch Einlassventilhub-Phasendifferenz und Auslassventilhub-Phasendifferenz aufgespannte Ebene und die signalfrequenzabhängige Phasenverschiebung der ermittelten Linien gleicher Phasenlagen zur Ermittlung deren einzigen gemeinsamen Schnittpunkts, auf der Basis entsprechender algebraischer Funktionen erfolgt.

7. Verfahren nach einem der Ansprüche 1 bis 6, **dadurch gekennzeichnet, dass** das Verfahren auf einem elektronischen, programmierbaren Motor-Steuergerät des betreffenden Serien-Verbrennungsmotors ausgeführt wird.

8. Verfahren nach Anspruch 7, **dadurch gekennzeichnet, dass** eine Anpassung von Steuergrößen oder Steuerroutinen im Sinne einer Korrektur der oder Anpassung an die ermittelte Kolbenhub-Phasendifferenz, die ermittelte Einlassventilhub-Phasendifferenz und die ermittelte Auslassventilhub-Phasendifferenz auf dem Motor-Steuergerät vorgenommen wird.

9. Verfahren nach einem der vorangehenden Ansprüche, **dadurch gekennzeichnet, dass** die ausgesuchten Signalfrequenzen die Ansaugfrequenz und weitere vielfache der Ansaugfrequenz des Verbrennungsmotors beinhalten.

10. Verfahren nach einem der vorangehenden Ansprüche, **dadurch gekennzeichnet, dass** die dynamischen Druckschwingungen mit Hilfe eines serienmäßigen Drucksensors im Saugrohr gemessen werden.

11. Verfahren nach einem der vorangehenden Ansprüche, **dadurch gekennzeichnet, dass** das Kurbelwellen-Phasenwinkelsignal mit einem mit der Kurbelwelle verbundenen Zähnerad und einem Hall-Sensor ermittelt wird.

## Claims

1. Method for the combined identification of a piston stroke phase difference, of an inlet valve stroke phase difference and an outlet valve stroke phase difference of a cylinder of a series-production internal combustion engine during operation, wherein
- dynamic pressure oscillations, assignable to the cylinder, of the intake air in the air intake tract and/or of the exhaust gas in the exhaust-gas outlet tract of the respective series-production internal combustion engine are measured during operation and a corresponding pressure oscillation signal is generated from these, and wherein a crankshaft phase angle signal is determined at the same time,
- wherein, from the pressure oscillation signal, using discrete Fourier transformation, the phase positions of more than two selected signal frequencies of the measured pressure oscillations in relation to the crankshaft phase angle signal are determined, **characterized by** the following further steps:
- on the basis of the determined phase positions of the respective selected signal frequencies, determining more than two lines of equal phase positions of the selected signal frequencies, which lines are dependent on inlet valve stroke phase difference and outlet valve stroke phase difference, using reference lines of equal phase positions, which reference lines are stored in reference line characteristic maps or determined by means of a respective algebraic model function;
- determining a single common intersection point of the determined lines of equal phase positions of the selected signal frequencies by projection into a common plane spanned by inlet valve stroke phase difference and outlet valve stroke phase difference and signal-frequency-dependent phase shifting of the determined lines of equal phase positions;
- determining the inlet valve stroke phase difference and the outlet valve stroke phase difference from the determined single common intersection point of the lines of equal phase positions of the selected signal frequencies, and
- determining the piston stroke phase difference from the values of the phase shift that has been performed to the single common intersection point of the lines of equal phase positions of the selected signal frequencies.

2. Method according to Claim 1, **characterized in that** said method comprises the following preceding steps:
- performing measurement on a reference internal combustion engine in order to determine reference lines of equal phase positions of selected signal frequencies of the pressure oscillation signal of the intake air in the air intake tract and/or of the exhaust gas in the exhaust-gas outlet tract in a manner dependent on reference inlet valve stroke phase difference and reference outlet valve stroke phase difference, and
- storing the reference lines of equal phase positions of the selected signal frequencies of the pressure oscillation signal in a manner dependent on reference inlet valve stroke phase difference and reference outlet valve stroke phase difference in reference line characteristic maps.

3. Method according to Claim 2, **characterized in that** the reference line characteristic maps are stored in a memory area of an engine control unit of the respective series-production internal combustion engine.

4. Method according to Claim 2, **characterized in that**, from the reference line characteristic maps of the selected signal frequencies of the pressure oscillation signal, for the respective signal frequency, an algebraic model function is derived which replicates the profile of the respective reference lines of equal phase positions of the selected signal frequencies of the pressure oscillation signal in a manner dependent on reference inlet valve stroke phase difference and reference outlet valve stroke phase difference.

5. Method according to Claim 4, **characterized in that** the algebraic model functions for the selected signal frequencies are stored in a memory area of an engine control unit of the respective series-production internal combustion engine.

6. Method according to one of the preceding claims, **characterized in that** the projection of the determined lines of equal phase positions into a common plane spanned by inlet valve stroke phase difference and outlet valve stroke phase difference, and the signal-frequency-dependent phase shifting of the determined lines of equal phase positions in order to determine their single common intersection point, are performed on the basis of corresponding algebraic functions.

7. Method according to one of Claims 1 to 6, **characterized in that** the method is executed on an electronic, programmable engine control unit of the respective series-production internal combustion engine.

8. Method according to Claim 7, **characterized in that** an adaptation of control variables or control routines in the context of a correction of or adaptation to the determined piston stroke phase difference, the determined inlet valve stroke phase difference and the determined outlet valve stroke phase difference is performed on the engine control unit.

9. Method according to one of the preceding claims, **characterized in that** the selected signal frequencies include the intake frequency and further multiples of the intake frequency of the internal combustion engine.

10. Method according to one of the preceding claims, **characterized in that** the dynamic pressure oscillations are measured by means of a series-production-type pressure sensor in the intake pipe.

11. Method according to one of the preceding claims, **characterized in that** the crankshaft phase angle signal is determined by means of a toothed gear connected to the crankshaft and by means of a Hall sensor.

## Revendications

1. Procédé d'identification combinée d'une différence de phase de course de piston, d'une différence de phase de course de soupape d'admission et d'une différence de phase de course de soupape d'échappement d'un cylindre d'un moteur à combustion interne série en fonctionnement,
- des oscillations de pression dynamiques de l'air d'admission dans le conduit d'admission d'air et/ou des gaz d'échappement dans le conduit de sortie de gaz d'échappement du moteur à combustion interne série en question, lesquelles oscillations peuvent être associées au cylindre, étant mesurées en fonctionnement et un signal d'oscillation de pression correspondant étant généré à partir de celles-ci et un signal d'angle de phase de vilebrequin étant déterminé en même temps,
- les positions de phase de plus de deux fréquences de signal sélectionnées des oscillations de pression mesurées par rapport au signal d'angle de phase de vilebrequin étant déterminées à partir du signal d'oscillation de pression à l'aide d'une transformation de Fourier discrète, **caractérisé par** les étapes supplémentaires suivantes :
- déterminer, sur la base des positions de phase déterminées des fréquences de signal sélectionnées respectives, plus de deux lignes de positions de phase identiques des fréquences de signal sélectionnées, lesquelles sont fonction de la différence de phase de course de soupape d'admission et de la différence de phase de course de soupape d'échappement, à l'aide de lignes de référence des mêmes positions de phase qui sont mémorisées dans des diagrammes caractéristiques de lignes de référence ou qui sont déterminées au moyen d'une fonction algébrique modèle respective ;
- déterminer un point commun unique d'intersection des lignes déterminées de mêmes positions de phase des fréquences de signal sélectionnées par projection dans un plan commun passant par la différence de phase de course de soupape d'admission et la différence de phase de course de soupape d'échappement et par décalage de phases, dépendant de la fréquence de signal, des lignes déterminées de mêmes positions de phase ;
- spécifier la différence de phase de course de soupape d'admission et la différence de phase de course de soupape d'échappement à partir du point commun unique déterminé d'intersection des lignes de mêmes positions de phase des fréquences de signal sélectionnées et
- spécifier la différence de phase de course de piston à partir des valeurs du décalage de phases qui a eu lieu jusqu'au point commun unique d'intersection des lignes de mêmes positions de phase des fréquences de signal sélectionnées.

2. Procédé selon la revendication 1, **caractérisé en ce qu'**il comprend les étapes précédentes suivantes :
- mesurer un moteur à combustion interne de référence pour spécifier les lignes de référence de mêmes positions de phase des fréquences de signal sélectionnées du signal d'oscillation de pression de l'air d'admission dans le conduit d'admission d'air et/ou des gaz d'échappement dans le conduit de sortie de gaz d'échappement en fonction de la différence de phase de course de soupape d'admission de référence et de la différence de phase de course de soupape d'échappement de référence et
- mémoriser les lignes de référence de mêmes positions de phase des fréquences de signal sélectionnées du signal d'oscillation de pression en fonction de la différence de phase de course de soupape d'admission de référence et de la différence de phase de course de soupape d'échappement de référence dans des diagrammes caractéristiques de lignes de référence.

3. Procédé selon la revendication 2, **caractérisé en ce que** les diagrammes caractéristiques de lignes de référence sont mémorisés dans une zone de mémoire d'une unité de commande de moteur du moteur à combustion interne série en question.

4. Procédé selon la revendication 2, **caractérisé en ce qu'**une fonction algébrique modèle est dérivée des diagrammes caractéristiques de lignes de référence des fréquences de signal sélectionnées du signal d'oscillation de pression pour la fréquence de signal respective, laquelle fonction reproduit l'allure des lignes de référence respectives de mêmes positions de phase des fréquences de signal sélectionnées du signal d'oscillation de pression en fonction de la différence de phase de course de soupape d'admission de référence et de la différence de phase de course de soupape d'échappement de référence.

5. Procédé selon la revendication 4, **caractérisé en ce que** les fonctions algébriques modèles pour les fréquences de signal sélectionnées sont mémorisées dans une zone de mémoire d'une unité de commande de moteur du moteur à combustion interne série en question.

6. Procédé selon l'une des revendications précédentes, **caractérisé en ce que** la projection des lignes déterminées de mêmes positions de phase dans un plan commun passant par la différence de phase de course de soupape d'admission et par la différence de phase de course de soupape d'échappement et le décalage de phases, dépendant de la fréquence de signal, des lignes déterminées de mêmes positions de phase pour déterminer leur point commun unique d'intersection, sont effectués sur la base de fonctions algébriques correspondantes.

7. Procédé selon l'une des revendications 1 à 6, **caractérisé en ce que** le procédé est mis en œuvre sur une unité de commande de moteur électronique programmable du moteur à combustion interne série en question.

8. Procédé selon la revendication 7, **caractérisé en ce qu'**une adaptation de grandeurs de commande ou de routines de commande au sens d'une correction de la différence de phase de course de piston déterminée, de la différence de phase de course de soupape d'admission déterminée et de la différence de phase de course de soupape d'échappement déterminée ou au sens d'une adaptation à celles-ci est effectuée sur le dispositif de commande de moteur.

9. Procédé selon l'une des revendications précédentes, **caractérisé en ce que** les fréquences de signal sélectionnées contiennent la fréquence d'admission et d'autres multiples de la fréquence d'admission du moteur à combustion interne.

10. Procédé selon l'une des revendications précédentes, **caractérisé en ce que** les oscillations de pression dynamique sont mesurées à l'aide d'un capteur de pression standard situé dans le tube d'admission.

11. Procédé selon l'une des revendications précédentes, **caractérisé en ce que** le signal d'angle de phase de vilebrequin est déterminé au moyen d'une roue dentée reliée au vilebrequin et d'un capteur à effet Hall.
